# EUROPEAN PATENT APPLICATION

(11) **EP 1 505 830 A1**
(43) Date of publication of application: **09.02.2005**
(21) Application number: 03772875.5
(22) Date of filing: 18.11.2003
(51) Int. Cl.: H04N 5/76

(54) **VIDEO CHECK SYSTEM AND METHOD**

(30) Priority: 19.11.2002 JP 2002334550
(71) Applicant: NEC Corporation, Minato-ku, Tokyo 108-8001 (JP)
(72) Inventor: KASUTANI, Eiji, c/o NEC Corporation, Tokyo 108-8001 (JP); SATO, Takami, c/o NEC Corporation, Tokyo 108-8001 (JP); YAMADA, Akio, c/o NEC Corporation, Tokyo 108-8001 (JP); OAMI, Ryoma, c/o NEC Corporation, Tokyo 108-8001 (JP)
(74) Representative: VOSSIUS & PARTNER
(86) International application number: PCT/JP2003/014672
(87) International publication number: WO 2004/047437

(57) **Abstract**

An video access system with which a utilization state of several types of video groups can be easily comprehended and a method thereof are provided. An on-air video, an edited video, and a material video are stored in an video storage part 106, and a mutual corresponding relation obtained from series of corresponding relations of these video groups is stored in a corresponding information storage part 108. When one of the on-air video, the edited video, and the material video is designated, a corresponding information search part 107 specifies other video corresponding to the designated video with reference to the mutual corresponding relation. The corresponding relation between the designated video and the specified video is visually displayed on a display part 102.

## Description

### TECHNICAL FIELD

This invention relates to the technology for searching and viewing a desired video from a plural group of videos, and relates, in particular, to an video viewing system and method for viewing information regarding video production.

### BACKGROUND OF THE ART

In order to provide a more sufficient explanation of the current state of the art regarding this technology, complete explanations of all patents, patent applications, patent publications, scientific literature, and etc., cited and specified in this application are incorporated through references.

First, in the explanation below, a basic video, represented by video filmed on site, is referred to as "raw video"; an video created by editing the raw video is referred to as "edited video"; a final broadcasted video, which is based on an edited video, is referred to as "on-air video."

In general, the editing process is indispensable to the production of videos and it is rare for videos to be used completely as filmed. In addition, when broadcasting the edited videos, broadcasting stations may cut videos midway through due to time restraints or may interrupt these videos with a caption. Therefore, the actual broadcasted video is not necessarily the same as the edited video. In order to save on-air videos and edited videos such as these, and to create new videos by selecting required segments from these videos, it is necessary to manage the groups of videos which will be used as video material, and to search and view target videos.

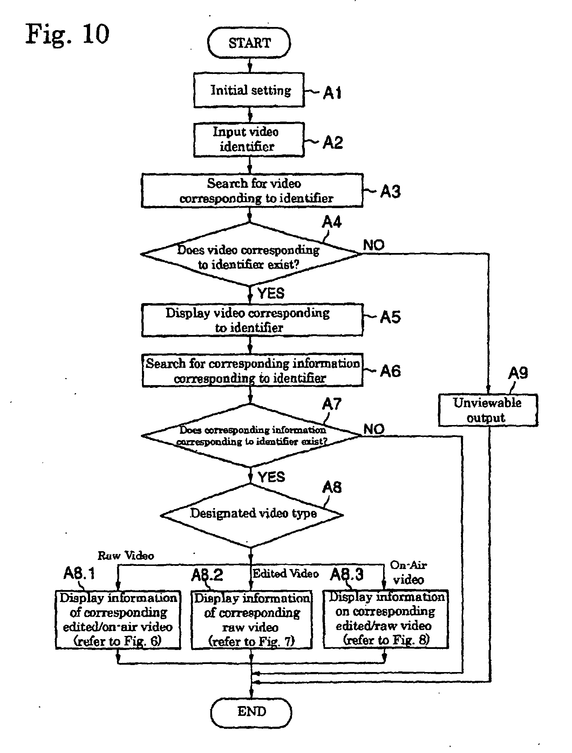

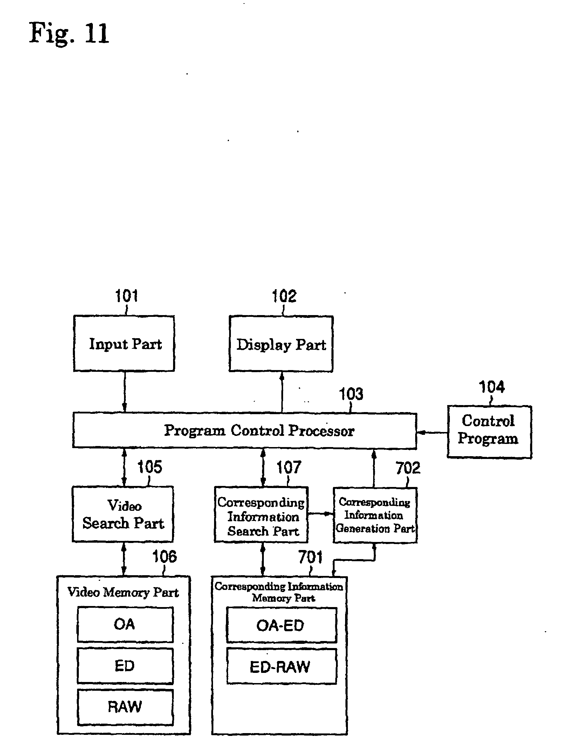

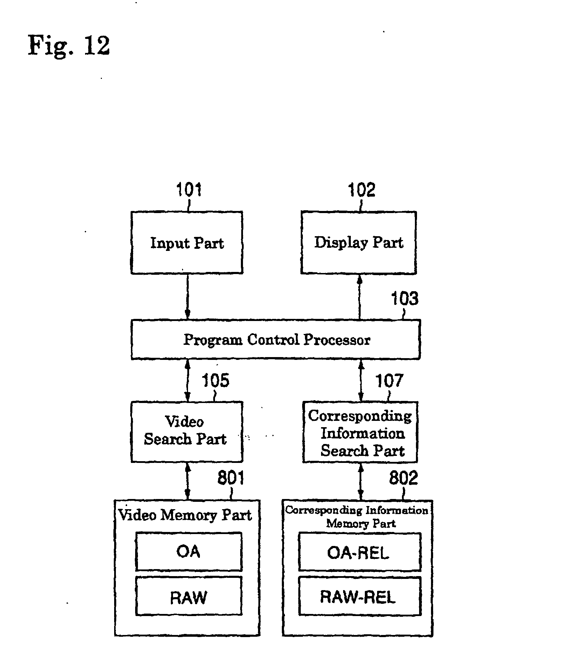

An example of an video viewing system similar to this is disclosed in the Japanese unexamined patent publication No. 11-266422. A broadcast program managing device, which is disclosed in the said publication, stores the mapping between a complete package (on-air video) and a pre-captioned video (edited video) to the memory beforehand. Specifically, the complete package data, which is stored in the memory, is divided into one shot for each cut, and the similarities between a shot from a complete package and an video segment from a pre-captioned video are determined by using the correlation value of the frame video. In this way, video segment information for each complete package shot and video segment shot for the pre-captioned video determined to be similar can be mapped (refer to Paragraphs 0048 to 0058, Fig. 10, and Fig. 11 of the aforementioned publication). Based on this data related to complete package/pre-captioned video, it is possible to reciprocally search and play the pre-captioned video segment corresponding to the desired video segment in the complete package (refer to Paragraph 0060, 0061, and Fig. 12 of the aforementioned publication).

### ISSUES THIS INVENTION ATTEMPTS TO SOLVE

However, in the current system above, access to raw videos related to on-air videos and edited videos is not taken into consideration. Although raw videos are utilized according to various objectives, they are the matrix of subsequent video production and are also an important group of videos which provides primary data.

For example, even though edited videos are produced by using raw videos in parts, based on the social conscious and intent of the time, social conscious changes with time, and with this change, a different part of the same raw video may be regarded as a vital scene.
Taking news broadcast as an example, the production of a news footage which is to be broadcast on the same day can be achieved by reusing edited videos. However, when creating a more detailed content for a feature program at a later date, the edited videos are insufficient, and, in many cases, it is necessary to search as far back as raw videos for necessary videos.

When creating contents by only assembling segments which have been already used, or in contrast, creating new contents by using un-aired parts, keeping track of the usage of raw videos becomes important. The current system above only plays back the edited videos corresponding to on-air videos, and can not keep track of which section of a raw video was used for which video.

Therefore, the objective of this invention is to provide an video viewing system and method which allows the usages of plural video groups to be kept track of easily.

Another objective of this invention is to provide an video viewing system and method which will increase production efficiency through easy access to raw videos related to on-air and edited videos.

### DISCLOSURE OF THE INVENTION

In an video viewing system according to a first aspect of the invention, an video belonging to one of a first video group, a second video group produced by using the first video group, and a third video group produced by using the second video group is designated, whereby an video of other video group having a corresponding relation with the designated video is specified, and the corresponding relation is displayed.

An video viewing system according to a second aspect of the invention comprises a first storage part for searchably storing a plurality of video groups having series of corresponding relations, wherein an video belonging to the next video group is produced by using at least one video from an video group; a second storage part for searchably storing a mutually corresponding relation obtained from the said series of corresponding relations; and a control part whereby, when an video belonging to one of the said plural video groups is designated, an video belonging to another video group having a corresponding relation with the said designated video is specified with reference to the said second storage part, and the corresponding relation between the said designated video and the said specified video is displayed on a display part.

By an video viewing method according to a third aspect of the invention, a) plural video groups having series of corresponding relations, wherein an video belonging to the next video group is produced by using at least one video from an video group, are searchably stored, b) a mutually corresponding relation generated from said series of corresponding relations is stored, c) when an video belonging to one of the said plural video groups is designated; an video belonging to another video group having a corresponding relation with the said designated video is specified with reference to said mutually corresponding relation, d) the said designated video is displayed in the first area of a display screen, and e) the corresponding relation between the said designated video and the said specified video is displayed in the second area of the said display screen.

In an video viewing method for viewing desired video from a plurality of videos according to the fourth aspect of the invention, a designated video and an video from another video group having corresponding relations is specified and the corresponding relation between the said designated video and said specified video is displayed by designating an video belonging to one of a first video group, a second video group produced by using the first video group, and a third video group produced by using the second video group.

The said corresponding relation can be generated from a series of corresponding relations wherein an video for the next video group is produced using one or more videos from a certain video group. Furthermore, desired display form corresponding to each of the said plural video groups can be prepared and, by the display form corresponding to the video group the said designated video belongs to, the corresponding relation between the said designated video and the said specified video can be displayed. In addition, with the said display form, a contrastive display of the video segment of the said specified video can be shown based on the video segment of the said designated video.

As explained above, according to this invention, the usage of a plurality of video groups can be kept track of easily. For example, if a plurality of video groups consists of on-air videos, edited videos, and raw videos, when a raw video is designated, the edited video and on-air video using this raw video is specified and this information is displayed. When an edited video is designated, the raw video used to produce this edited video is specified and this information is displayed. When an on-air video is designated, the edited video found in this on-air video is specified, and this information and information on the raw video used to produce this edited video are displayed. In this way, the corresponding relation between a plurality of video groups, which are on-air videos, edited videos and raw videos, become visible, and the usage of videos, including raw videos, can be kept track of easily.

Also, because edited videos and on-air videos can be mapped to raw videos, raw videos relating to on-air videos and edited videos can be accessed easily and production efficiency can be increased.

When an video from one video group out of a plurality of video groups is designated, a contrastive display of the video segment of the specified video, based on the video segment of the designated video, is ideal, through which, it will be easier to know which videos of the other video groups correspond to the video segment of the designated video.

Furthermore, if the specified video is designated in the corresponding relation between a designated video and a specified video, it is best to search for the specified video and to display this video as a designated video. For example, by indicating the corresponding relation between a plurality of video groups, such as on-air videos, edited videos and raw videos, with a mark and selecting the indicated mark with a pointer, an video segment of an video corresponding to a mark can be accessed. In this way, access to related videos becomes easier and production efficiency is increased.

### BRIEF DESCRIPTION OF DRAWINGS

FIG. 1 is a block diagram showing an video access system structure according to a first embodiment of the invention;
FIG. 2A is a diagram showing an example of an on-air video corresponding information format in the first embodiment;
FIG. 2B is a diagram showing an example of an edited video corresponding information format;
FIG 2C is a diagram showing an example of a raw video corresponding information format;
FIG 2D is a diagram showing an example of a multipurpose corresponding information format;
FIG 3A is a pattern diagram showing an example of a storing table for on-air video corresponding information according to a first embodiment of the invention;
FIG. 3B is a pattern diagram showing an example of a storing table for edited video corresponding information;
FIG 3C is a pattern diagram showing an example of a storing table for raw video corresponding information;
FIG 4 is a block diagram showing an example of a system structure for generating corresponding information according to a first embodiment of the invention;
FIG 5A is a pattern diagram showing the corresponding relation between on-air videos and edited videos, and corresponding relation between edited videos and raw videos, according to a first embodiment of the invention;
FIG 5B is a pattern diagram showing the corresponding relation between on-air videos, edited videos, and raw videos;
FIG 6 is a diagram showing a viewing display example of raw video corresponding information according to a first embodiment of the invention;
FIG 7 is a diagram showing an example of a viewing display of edited video corresponding information according to a first embodiment of the invention;
FIG 8 is a diagram showing an example of a viewing display of on-air corresponding information according to a first embodiment of the invention;
FIG 9 is a pattern diagram showing an example of an operation screen of an video viewing system according to a first embodiment of the invention;
FIG. 10 is a flowchart showing an overview of the operation according to a first embodiment of the invention;
FIG. 11 is a block diagram of the structure of an video viewing system according to a second embodiment of the invention;
FIG. 12 is a block diagram of an video viewing system according to a third embodiment of the invention;
FIG. 13 is a diagram showing an example of a viewing display of raw video corresponding information according to a third embodiment of the invention;
FIG. 14 is a Fig. showing an example of a viewing display of on-air video corresponding information according to a third embodiment of the invention;
FIG 15 is a block diagram of the video viewing system according to a fourth embodiment.

### BEST MODES FOR IMPLEMENTING THE INVENTION

### (First embodiment)

### A: System configuration

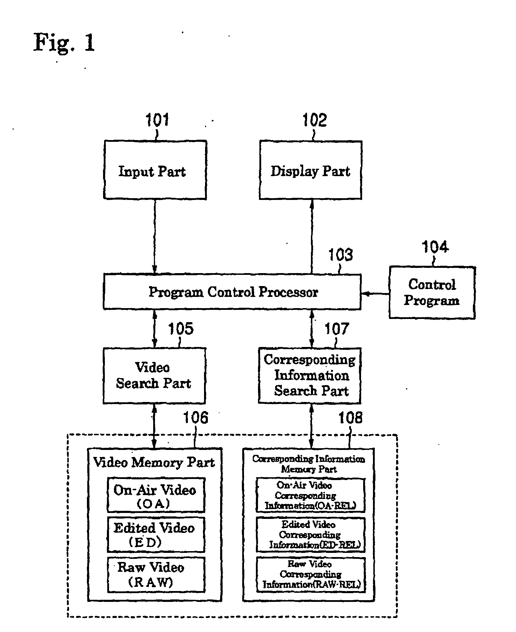

FIG. 1 is a block diagram which shows the video viewing system according to a first embodiment of the invention. In FIG. 1, input part 101 is an input device such as a keyboard or a pointing device, and can be used to designate an video to be viewed, to input data, or to input various commands. Display part 102 is a monitor, and displays an video viewing screen, hereinafter mentioned, and provides a graphical user interface in cooperation with the input part 101.

The video viewing system according to this embodiment includes a program control processor 103, which controls operations of the total system and processing related to video viewing by executing control program 104, an video search part 105, an video memory part 106, a corresponding information search part 107, and a corresponding information memory part 108. Video search part 105 and corresponding information search part 107 respectively perform video search and corresponding information search, hereinafter mentioned, under the control of program control processor 103.

In the video memory part 106, on-air video group (OA), edited video group (ED) and raw video group (RAW) are stored. Raw video group (RAW) is raw videos filmed on site which have been, for example, stored as digital graphic data, and are kept track of separately with identifiers unique to each raw video.

Edited video group (ED) is videos for broadcasting, consisting of carefully selected and edited raw videos, which have been, for example, stored as digital graphic data, and are kept track of separately with identifiers unique to each edited video. Video-related information, such as titles and date of production can be stored as well.

On-air video group (OA) is the final broadcasted videos which have been, for example, stored as digital graphic data, and are kept track of separately with identifiers unique to each on-air video. Video-related information, such as titles and date of production can be stored as well.

When the video search part 105 receives video search instructions from the program control processor 103, it searches the video memory part 106 for video data which corresponds to the designated video identifier. The video data which has been read is shown in the display part 102 along with video data-related information, hereinafter mentioned. If the starting point of an video is included in the video search instruction, it is possible to play back the read video from the starting point, and to cue the designated video to this starting point.

On-air video corresponding information (OA-REL), edited video corresponding information (ED-REL) and raw video corresponding information (RAW-REL) are stored in corresponding information memory part 108. These corresponding information will be explained in more detail later.

When the corresponding information search part 107 receives corresponding information search instructions, it searches the corresponding information memory part 108 for corresponding information related to the designated video. The corresponding information which has been read is shown on display part 102 in a given form. A pointer which makes access to other corresponding videos possible is also shown at this time.

### B: Corresponding Information

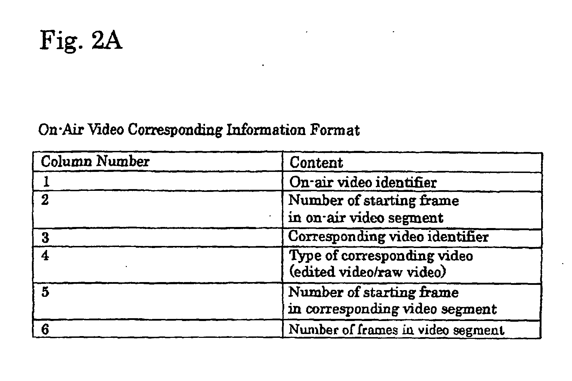

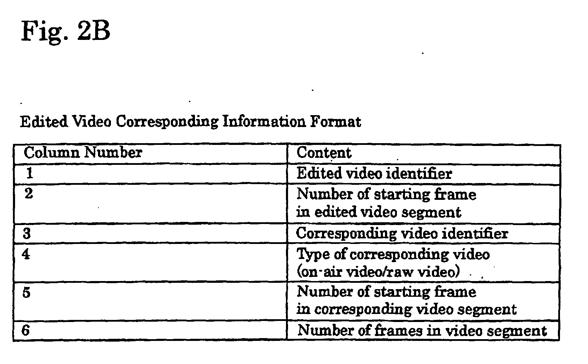

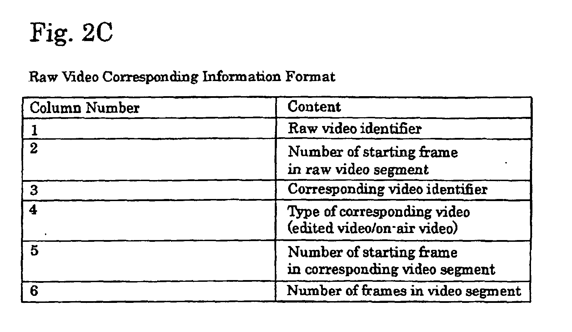

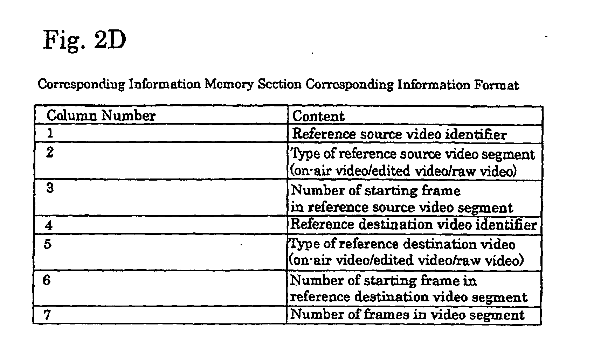

FIG 2A is a diagram which shows an example of a format for on-air video corresponding information. FIG. 2B is a diagram which shows an example of a format for edited video corresponding information. FIG. 2C is a diagram which shows an example of a format for raw video corresponding information. FIG 2D is a diagram showing an example of a format for multipurpose corresponding information. As shown in FIG. 2A, on-air video corresponding information is information which states the corresponding relation between on-air video, edited video, and raw video. In other words, it states which part of an on-air video is extracted from which part of an edited/raw video. On-air video corresponding information consists of six columns: Column 1 states the identifier of the on-air video; Column 2 states the number of the starting frame of the on-air segment; Column 3 states the identifier of the corresponding video; Column 4 states the video type of the corresponding video (edited video or raw video); Column 5 states the number of the starting frame of the video segment of the corresponding video; and Column 6 states the number of frames within the video segment. Through this information, the video segment of an edited video or a raw video corresponding to a certain video segment of a certain on-air video can be determined.

Corresponding relationship for each on-air video can be stored separately in their respective corresponding information files, or can be stored in one corresponding information file. For example, corresponding relation for on-air video A can be stored in corresponding information file a and corresponding relation for on-air video B can be stored in corresponding information file b, or corresponding relations for both on-air video A and B can be stored in one corresponding information file.

As shown in FIG. 2B, edited video corresponding information is information which states which part of an edited video was used for which part of an on-air video, or which part of an edited video was extracted from which part of a raw video. Edited video corresponding information consists of six columns: Column 1 states the identifier of the edited video; Column 2 states the number of the starting frame of the edited video segment; Column 3 states the identifier of the corresponding video; Column 4 states the video type of the corresponding video (on-air video or raw video); Column 5 states the number of the starting frame of the video segment of the corresponding video; and Column 6 states the number of frames within the video segment. Through this information, the video segment of an on-air video or a raw video corresponding to a certain video segment of a certain edited video can be determined.

As shown in FIG 2C, raw video corresponding information is information which states which part of a certain raw video was used in which part of which edited video/on-air video. Raw video corresponding information consists of six columns; Column 1 states the identifier of the raw video; Column 2 states the number of the starting frame of the raw video segment; Column 3 states the identifier of the corresponding video; Column 4 states the video type of the corresponding video (edited video or on-air video); Column 5 states the number of the starting frame of the video segment of the corresponding video; and Column 6 states the number of frames within the video segment. Through this, the video segment of an on-air video or an edited video corresponding to a certain video segment of a certain raw video can be determined.

One of the formats shown in FIG. 2D can be used in place of each of the corresponding information formats shown in FIG. 2A to Fig. 2C. In other words, as a general-use format: Column 1 states the identifier of the reference source video; Column 2 states the video type of the reference source video (on-air video, edited video, or raw video); Column 3 states the number of the starting frame of the reference source video segment; Column 4 states the identifier of the reference destination video ; Column 5 states the video type of the reference destination video (on-air video, edited video, or raw video); and Column 6 states the number of the starting frame of the reference destination video segment; Column 7 states the number of frames within an video segment.

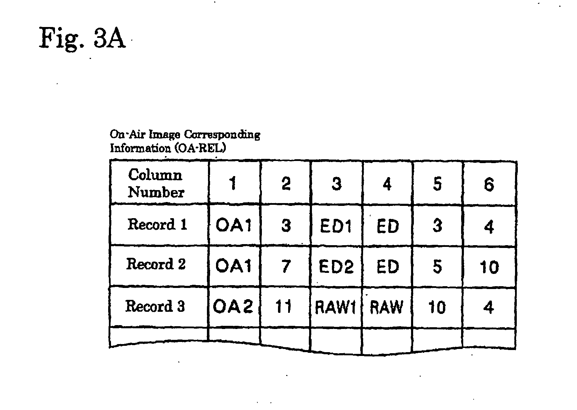

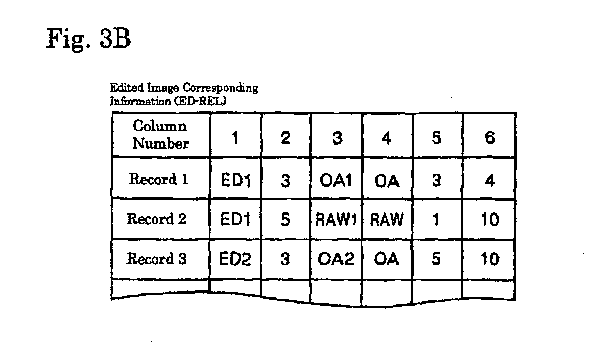

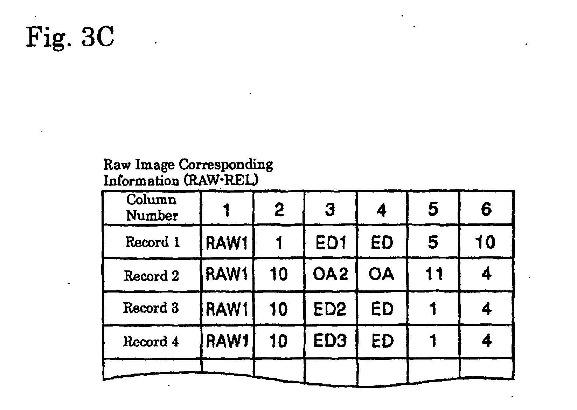

FIG. 3A is a pattern diagram which shows an example of a storing table for on-air video corresponding information. FIG 3B is a pattern diagram which shows an example of a storing table for edited video corresponding information. FIG. 3 C is a pattern diagram which shows an example of a storing table for raw video corresponding information.

As shown in FIG. 3A, on-air video corresponding information is stored in the format shown in FIG 2A individually for each on-air video segment of each on-air video. For example, Stored Record 1 indicates Frame 3 to Frame 4 of On-air Video OA1 corresponds to Frame 3 to Frame 4 of Edited Video ED 1. Likewise, Record 2 shows Frame 7 to Frame 10 of the same On-air Video OA1 corresponds to Frame 5 to Frame 10 of the Edited Video ED2. The same applies to the tables in FIG 3B and FIG 3C, as well.

### C: Generating Corresponding Information

First, information which indicates corresponding relation, as in which part of a certain edited video was extracted from which part of which raw video, is referred to as edited video - raw video corresponding information (ED-RAW corresponding information). This information can be acquired by recording the raw video selected during the time of editing to the system. Also, information which indicates corresponding relation, as in what part of a certain on-air video was broadcast using what part of which edited video is referred to as on-air video - edited video corresponding information (ED-RAW corresponding information). This information can be acquired by recording the edited video actually selected during the time of broadcasting to the system.

If there are no records of ED-RAW corresponding information or OA-ED corresponding information, it can be automatically generated by, for example, mapping video segments with similar characteristics, utilizing a video search technology disclosed in Japanese unexamined patent publication No. 2002-58049

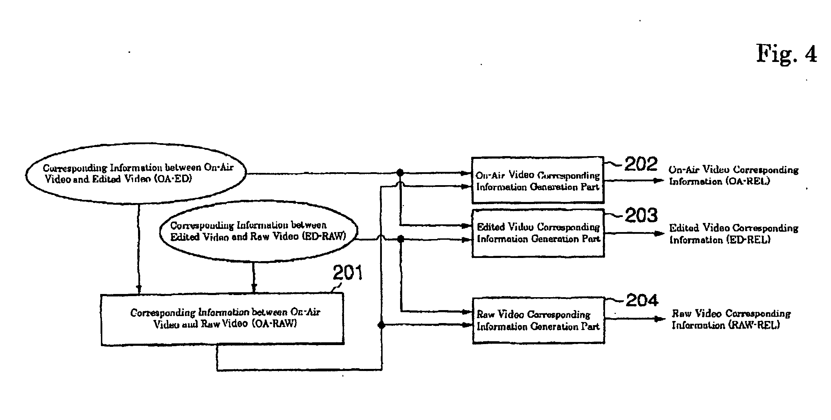

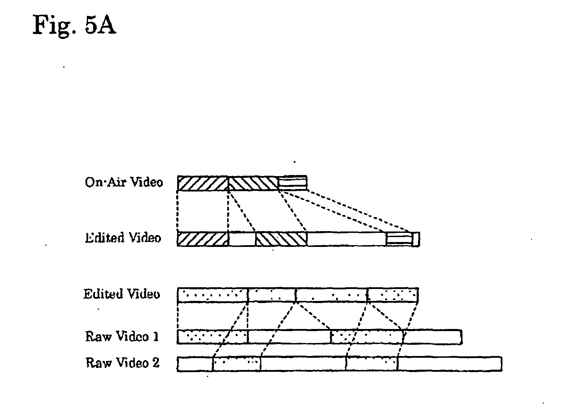

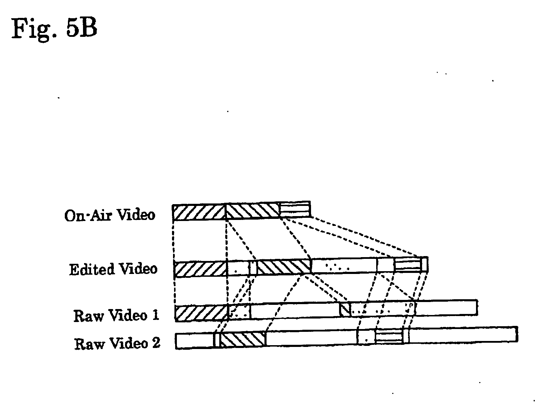

FIG 4 is a block diagram which shows an example of a system structure for generating corresponding information in this embodiment. FIG. 5A is a pattern diagram showing the corresponding relation between on-air video and edited video, and corresponding relation between edited video and raw video. FIG. 5B is a pattern diagram showing the corresponding relation between on-air video, edited video, and raw video.

In FIG 4, the corresponding information generation system incorporates on-air video - edited video corresponding information generation part 201, on-air video corresponding information generation part 202, edited video corresponding information generation part 203, and raw video corresponding information generation part 204. This corresponding information generation system can be embedded into this system shown in FIG 1.

On-air - raw video corresponding information generation part 201 generates on-air video - raw video corresponding information (OA-RAW corresponding information) utilizing OA-ED corresponding information and ED-RAW corresponding information.

Specifically, as shown in FIG. 5A, each video segment in the edited video data used in the on-air video (hereinafter referred to as edited video segment) is first retrieved, referring to OA-ED corresponding information. Next, each video segment in the raw video data corresponding to the edited video segment (hereinafter referred to as raw video segment) can be specified by searching corresponding information for edited videos including edited video segment through ED-RAW corresponding information, in regards to each of the retrieved edited video segments,. OA-RAW corresponding information can be obtained by mapping this specified raw video segment to the aforementioned on-air video segment. As shown in FIG 5B, if a raw video segment corresponding to a certain specified on-air video extends over plural raw videos, the corresponding relation with on-air video is indicated for each segment of each corresponding raw video (refer to FIG. 3).

If OA-RAW corresponding information is generated and stored beforehand, on-air video - raw video corresponding information generation part 201 is unnecessary. On-air video corresponding information generation part 202 generates on-air video corresponding information (OA-REL) which states which part of an on-air video was extracted from which part of which edited video or raw video for every on-air video, through OA-ED corresponding information and OA-RAW corresponding information (refer to FIG. 3A).

Edited video corresponding information generation part 203 generates edited video corresponding information (ED-REL) stating which part of an edited video was used for which part of which on-air video, and which part of an edited video was extracted from which part of which raw video, for each edited video, through OA-ED corresponding information and ED-RAW corresponding information (refer to FIG 3B).

Raw video corresponding information part 204 generated raw video corresponding information (RAW-REL) stating which part of a raw video was used for which part of an edited video or on-air video for each raw video, through OA-RAW corresponding information and ED-RAW corresponding information (refer to FIG 3C).

### D: Display Example of Raw Video Corresponding Information

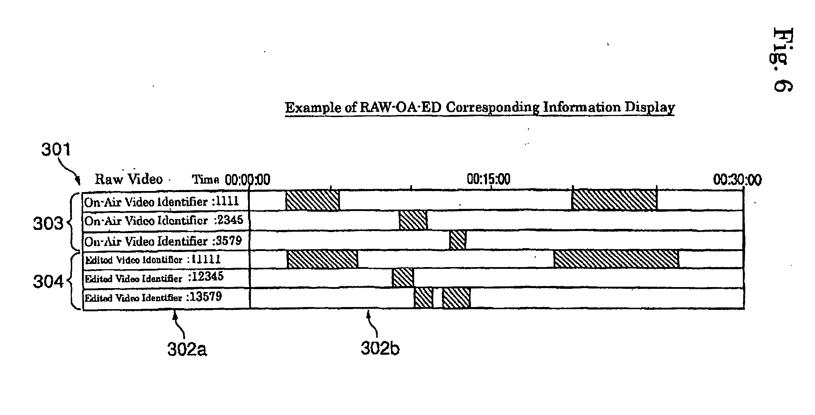

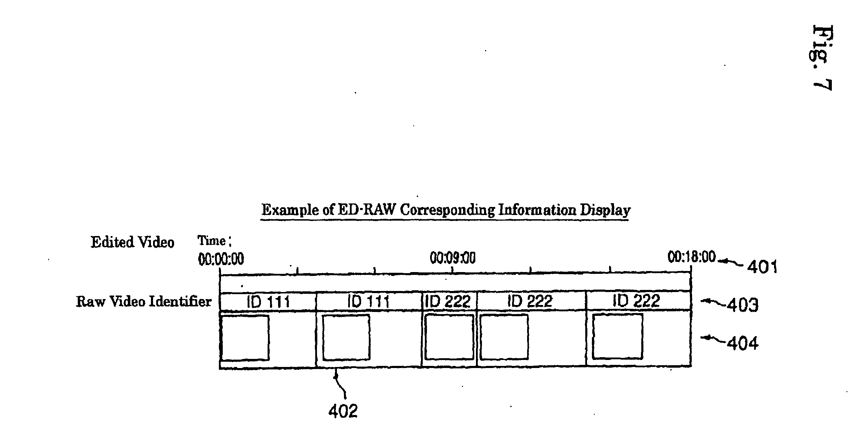

FIG 6 is a diagram showing an example of a viewing display for raw video corresponding information. When a certain raw video is designated, the time of this raw video is indicated in display section 301. Furthermore, by referring to the raw video corresponding information for the designated raw video, "identifier of corresponding video" and "type", indicated in columns 3 and 4, respectively, are listed in display window 302a.
In addition, the display window 302b shows the raw video segment specified in the starting position indicated in column 2 and the number of frames indicated in column 6 using marks (shaded area of the diagram). In other words, referring to the raw video corresponding information, which part is used by which corresponding video (on-air video or edited video) is marked in display window 302b with the time of the raw video as the horizontal axis.

In the example shown in Fig. 6, this raw video is used in three on-air videos and three edited videos and each of the segments of the raw video used is marked. Through this, it is easy to see that the scene 20 minutes to 25 minutes into the raw video is used for the identifier 1111 on-air video.

In this embodiment, each mark for the segments of the raw video used can be indicated in the shape of a button, and by clicking on the desired mark with the input part 101, such as a mouse, the relevant corresponding video can be shown in the video viewing window.

### E: Display Example of Edited Video Corresponding Information

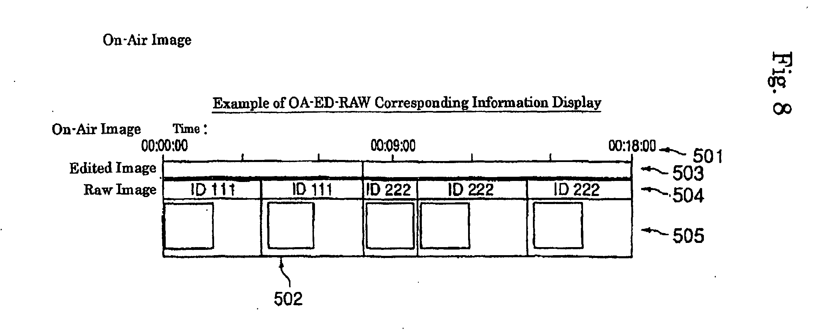

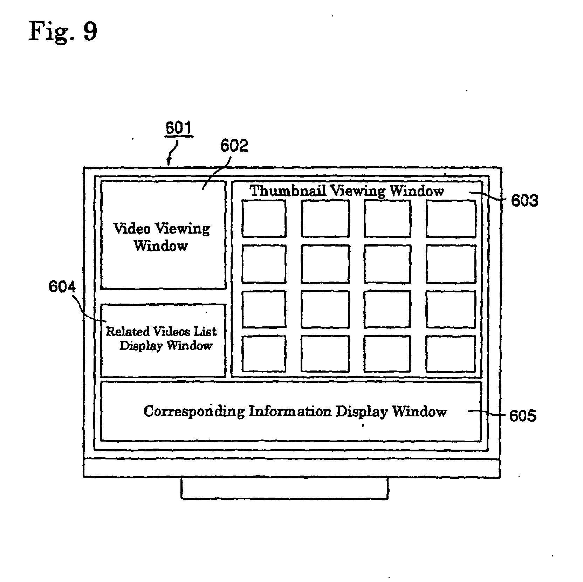

FIG 7 is a diagram showing an example of a viewing display for edited video corresponding information. When a certain edited video is designated, the time of this edited video is indicated in display section 401. Furthermore, the section for the corresponding video in window 402 is marked to make the edited video segment from the starting point indicated in column 2 to the number of frames in column 6 visible. The identifier of raw video is the content of the mark in display section 403 and representing frame of the raw video segment and frame corresponding to time is that in display section 404.

In this embodiment, each mark for the corresponding raw video can be indicated in the shape of a button, and by clicking on the desired mark with the input part 101, such as a mouse, the relevant corresponding video can be shown in the video viewing window.

### F: Display Example of On-Air Video Corresponding Information

FIG 8 is a diagram showing an example of a viewing display for on-air video corresponding information. When the designated video is an on-air video, the edited video included in the designated on-air video and the raw video used to produce it can be displayed. The time of this designated on-air video is indicated in display section 501. Furthermore, the section for the corresponding video in window 502 is marked to make the on-air video segment from the starting point indicated in column 2 to the' number of frames indicated in column 6 visible. The identifier of edited video is the content of the mark in display section 503, the identifier for the raw video is that in display section 504, and the representing frame of the raw video segment is that in display section 505.

In this embodiment, each mark of the corresponding edited video and raw video can be indicated in the shape of a button, and by clicking on the desired mark with the input part 101, such as a mouse, the relevant corresponding video can be shown in the video viewing window.
In addition, a list of videos of the same type as the designated video, and a list of videos of other types having a corresponding relation can be displayed as well.

### G: Example of Operation Screen Display.

FIG 9 is a pattern diagram showing an example of an operation screen for an video viewing system in this embodiment. In the operation screen 601 displayed in display part 102, an video corresponding to the identifier designated by the viewer is shown in video viewing window 602, and the video of the provided starting point and the videos prior and subsequent to it are listed together in the thumbnail display window 603. In order to designate an video to be viewed, the identifier of the video can be provided directly by a keyboard in the input part 101. In addition, it is possible to provide a list of videos, allow users to select videos using a mouse and the like, and utilize the identifier of the selected video. It is also possible to input the starting point of the video to be viewed as well.

Furthermore, in the related information list display window 604, a list of videos of the same type as the designated video, and a list of videos of other types having a corresponding relation with the designated video are shown. In the corresponding information display window 605, corresponding information such as those exemplified in FIG 6 to 8 are displayed. For example, if a raw video is to be displayed, the video segment of an edited video data or the video segment of an on-air video data corresponding to the video segment in the raw data is displayed.

In this way, corresponding information between different video types become visible, and furthermore, because related video lists are also displayed, video viewing efficiency can be enhanced as well. In addition, as stated above, by providing buttons for the corresponding information made visible in the corresponding information display window 605, and by selecting with a mouse and the like in input part 101, the corresponding video segment can be accessed easily.

### I: Operation of the Video Viewing System

FIG 10 is a flowchart showing the overall operation in this embodiment. First, pre-mapped on-air video corresponding information (OA-REL), edited video corresponding information (ED-REL), and raw video corresponding information (RAW-REL) are stored to corresponding information memory part 108 (Step A1).

The user designates the video to be viewed via input part 101 (Step A2). Designation of the video to be viewed can be made by directly inputting the identifier or by allowing the user to select from a list of videos provided beforehand. As stated above, videos can also be designated by selecting the video segment with a corresponding relation to its starting frame from the corresponding information displayed in corresponding information display window 605.

When the identifier of the designated video is identified, the program control processor 103 instructs the video search part 105 to search for the relevant desired video. The video search part 105 searches the video memory part 105 using the designated identifier as the key (Step A3).
When the video holding the designated identifier is found (YES in Step A3), video search part 105 returns this designated video data to the program control processor 103. The processor control processor 103 displays the designated video data in video viewing window 602 of the display part 102 after data processing (Step A5).

Then, the program control processor 103 instructs the corresponding information search part 107 to perform a search using the designated identifier. Corresponding information search part 107 searches the corresponding information memory part 108 using the designated identifier as the key (Step A6).

When the corresponding information holding the designated identifier (refer to FIG. 2 and FIG 3) is found (YES in Step A7), the video type of the designated video is determined (Step A8), and corresponding information for each video type becomes visible in the desired format.

Specifically, when a raw video is designated, information such as the identifier and video segments of corresponding edited video and on-air video is displayed, referring to the retrieved raw video corresponding information, as is shown in FIG 6 (Step A8.1).

When an edited video is designated, information such as identifiers and video segments of corresponding raw videos is displayed, referring to retrieved edited video corresponding information, as is shown in FIG. 7 (Step A8.2).

When on-air video is designated, information such as the identifier and video segments of corresponding raw video and edited video corresponding to this is displayed, referring to the retrieved on-air video corresponding information, as is shown in FIG. 8 (Step A8.3).

If corresponding information is not found in Step A7 (NO in Step 7), corresponding information is not displayed. In addition, if an video holding the identifier provided in Step A4 is not found, it is determined inaccessible and a message, such as that indicating inaccessibility, is displayed (Step A9).
As stated earlier, in the first embodiment, when a raw video is designated, information on the edited video and on-air video using this designated raw video is displayed; when an edited video is designated, information on the raw video used to produce this designated edited video is displayed; when an on-air video is designated, information on the edited video included in this designated on-air video and the raw video used to produce it are displayed. By making the corresponding relation between on-air video, edited video, and raw video visible, it becomes easy to keep track of the usage of videos, including raw videos.

Furthermore, after making the corresponding relation between on-air video, edited video and raw video visible, by selecting the mark made visible with a pointer, the video segment of the video corresponding to the mark can be accessed and production efficiency can be increased.

In this embodiment, through the corresponding information generation system shown in FIG 4, on-air video corresponding information (OA-REL), edited video corresponding information (ED-REL), and (RAW-REL) can be generated by mapping on-air video and raw video. According to this embodiment, because edited videos and on-air videos are mapped to raw videos, raw videos related to on-air videos and edited videos can be accessed easily and production efficiency can be increased.

In the first embodiment, instances involving three types of video groups, raw video, edited video, and on-air video have been explained. However, when, for example, the viewing target is content or the like produced by extracting on-air videos, it goes without saying that this can be extended to N types (N>3) of video groups which have corresponding relations.

### (Second embodiment)

In the above first embodiment, on-air corresponding information (OA-REL), edited video corresponding information (ED-REL), and raw video corresponding information (RAW-REL) is determined beforehand and stored in corresponding information memory part 108. However, as explained in FIG 4, each corresponding information can be determined from ED-RAW corresponding information and OA-ED corresponding information by calculation. The video viewing system according to a second embodiment incorporates this corresponding information calculation function.

FIG 11 is a block diagram showing the structure of an video viewing system according to the second embodiment. As shown in FIG 11, in this system according to the second embodiment, corresponding information memory part 701 is provided in place of corresponding information part 108 in the first embodiment shown in FIG 1, and corresponding information generating part 702 is newly added as well.

All that needs to be stored in the corresponding information memory part 701 are two or more of the following corresponding information: edited information - raw information corresponding information, on-air - edited information corresponding information, ED-RAW corresponding information, OA-ED corresponding information, and OA-RAW corresponding information. If there are two or more of these corresponding information, it is clear, as shown in FIG 4, that on-air video corresponding information (OA-REL), edited video corresponding information (ED-REL) and raw video corresponding information (RAW-REL) can be calculated. ED-RAW corresponding information and OA-ED corresponding information are stored here.

The corresponding information generation part 702 calculates necessary corresponding information under the control of program control processor 103. Specifically, the corresponding information generating part 702 reads two corresponding information from the corresponding information memory part 701 and generates each corresponding information as explained in FIG. 4. The corresponding information search part 107 searches the corresponding information calculated by the corresponding information memory part 702 using the designated identifier as the key and, as stated above, returns the corresponding information holding the designated identifier to the program control processor 103. Explanations regarding other operations are omitted because they are the same as those in the first embodiment.

According to the second embodiment, all that needs to be stored in corresponding information memory part 701 are two or more of the following corresponding information: ED-RAW corresponding information, OA-ED corresponding information, and OA-RAW corresponding information. Therefore, required memory space can be reduced.

### (Third Embodiment)

The video viewing system according to a third embodiment handles only raw videos and on-air videos.

FIG. 12 is a block diagram of the video viewing system according to the third embodiment. Blocks having the same function as that in FIG. 1 carry the same reference number, and explanations will be omitted.

In FIG 12, on-air video group (OA) and raw video groups (RAW) are stored in video memory part 801. Raw video group (RAW) and on-air video group (OA) are the same as that in the first embodiment. On-air video corresponding information (OA-REL) and raw video corresponding information (RAW-REL) are stored in corresponding information part 802. These corresponding information are also the same as those in the first embodiment.

### J: Display Example of Raw Video Corresponding Information

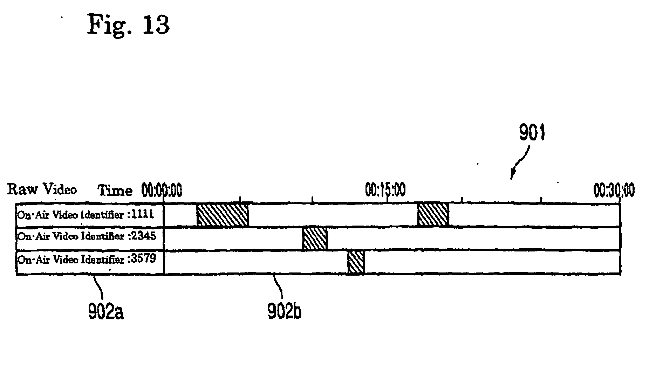

Fig. 13 is a diagram showing an example of a viewing display for raw video corresponding information according to the third embodiment. When a certain raw video is designated, the time of this raw video is indicated in display section 901. Furthermore, by referring to the raw video corresponding information for the designated raw video, the "identifier of the corresponding video" and "type" indicated in columns 3 and 4, respectively, are listed in display window 902a.

In addition, display window 902b shows the raw video segment specified in the starting point indicated in column 2 and the number of frames indicated in column 6 using a mark (shade area of diagram). In other words, referring to the raw video corresponding information, what part is used in which corresponding video (on-air video) is marked in display window 902b, with the time of the raw video as the horizontal axis.

In the example shown in Fig. 12, this raw video is used in three on-air videos and each segment of the raw video used is marked. Through this, it is easy to see that the scene 2 minutes to 6 minutes into the raw video is used in the identifier 1111 on-air video.

In this embodiment, each mark for the segments of the raw video used can be indicated in the shape of a button, and by clicking the desired mark using the input part 101, such as a mouse, the relevant corresponding video can be shown in the video viewing window.

### K: Display Example of On-Air Corresponding Information

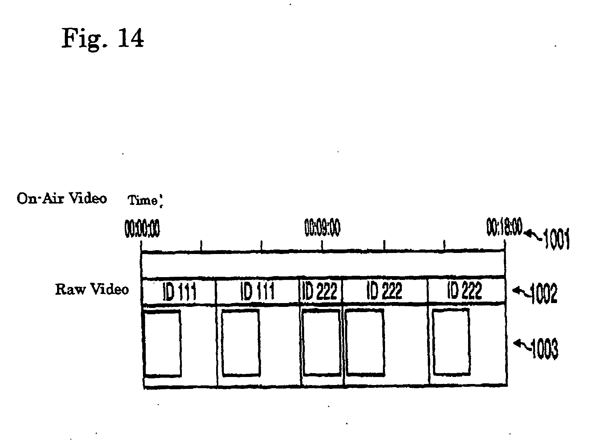

Fig. 14 is a diagram showing an example of a viewing display for on-air video corresponding information in the third embodiment. When the designated video is an on-air video, the raw video used to produce the designated on-air video can be displayed. The time of this designated on-air video is indicated in display section 1001. Furthermore, to make the on-air video segment from the starting frame indicated in column 2 to the number of frames indicated in column 6 visible, the sections for corresponding videos are marked. The raw video identifier is the content of the mark in display section 1002 and the representing frame of the raw video segment is that in display section 1003.

In this embodiment, each mark of the corresponding raw video can be indicated in the shape of a button, and by clicking the desired mark with the input part 101, such as a mouse, the relevant corresponding video can be shown in the video viewing window.

In addition, a list of videos of the same type, and a list of videos of another type corresponding to the designated video can be shown as well. The operating screen for the video viewing system according to the third embodiment is the same as that shown in FIG. 9, and, therefore, explanations will be omitted.

As stated above, in the third embodiment, when raw video is designated, the on-air video using the designated raw video is displayed; when on-air video is designated, the raw video included in the designated on-air video is displayed. By making the corresponding relation between on-air video and raw video visible, it becomes easy to keep track of the usage of videos, including raw videos.

Furthermore, after making the corresponding relation between on-air video and raw video visible, by selecting the mark made visible with a pointer, the video segment of the video corresponding to the mark can be accessed and production efficiency can be increased.

In this embodiment, through the corresponding information generation system shown in FIG. 4, on-air video corresponding information (OA-REL) and (RAW-REL) can be generated by mapping on-air video and raw video. According to this embodiment, because on-air videos are mapped to raw videos, raw videos related to on-air videos can be accessed easily and production efficiency can be increased.

### (Fourth Embodiment)

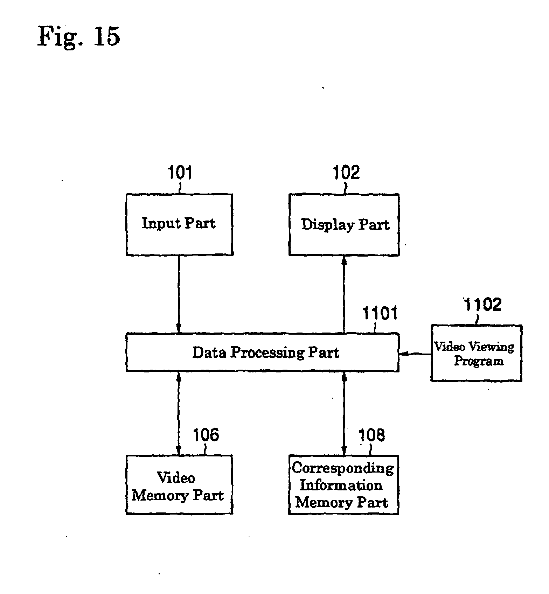

FIG 15 is a block diagram of the video viewing system according to the fourth embodiment. In this embodiment, video search part 105 and corresponding information search part 107, shown in FIG 1 is embedded into the data processing part 1101 by software. In other words, the video viewing function described in the first to third embodiments can be actualized when the data processing part executes video viewing program 1102. Input part 101, display part 102, video memory part 106 and corresponding information memory part 108 is controlled by the data procession part 1101, which is executing video viewing program 1102, in the same way as in the first, second and third embodiment, and the video viewing system by this invention can be realized.

In the embodiments above, instances involving three types of video groups, raw video, edited video and on-air video have been explained. However, when, for example, the viewing target includes content or the like produced by extracting on-air videos, it goes without saying that this can be extended to video groups beyond the three video groups having utilization relations.

As explained in detail above, according to this invention, the usage of a plurality of video groups can be easily kept track of. For example, if a raw video is designated, information on edited videos and on-air videos utilizing this raw video is displayed; if an edited video is designated, information on the raw video used to produce this edited video is displayed; and if an on-air video is designated, information on the edited video included in this on-air video, and information on the raw video used to produce it are displayed. In this way, corresponding relations between plural video groups, on-air videos, edited videos, and raw videos, become visible, and it becomes easy to keep track of the usage of videos, including raw videos.

Also, because edited videos and on-air videos are mapped to raw videos, raw videos related to on-air videos and edited videos become easy to access, and the production efficiency of videos increases.

Furthermore, after making the corresponding relations between on-air videos, edited videos, and raw videos visible, by selecting the mark made visible with a pointer, the video segment of the video corresponding to the mark can be accessed and production efficiency can be increased.

### INDUSTRIAL APPLICABILITY

The video viewing system and method related to this invention can be applied to everything if the video viewing system and method is for the purpose of viewing desired videos from a plurality of videos during editing work in video production, and there are no restrictions regarding applicability in these instances.

Although this invention was described in relation to several ideal implementation modes and implementation examples, these implementation modes and implementation examples are stated merely as examples to explain this invention, and it is understood that they do not represent restrictions. After reading this specification, it is clear that many modifications and replacements can be made easily with equivalent constitution and technology by persons having ordinary skill in the art. However, it is clear that modifications and replacements such as these do not adhere to the true scope and spirit of the attached claims.

## Claims

1. An video access system, wherein
an video of one of a first video group, a second video group produced by using the first video group, and a third video group produced by using the second video group is designated, whereby
an video of other video group having a corresponding relation with the designated video is specified, and the corresponding relation between the designated video and the specified video is displayed.

2. An video access system for accessing a desired video from a plurality of videos, comprising:
a first storage part for searchably storing a plurality of video groups having series of corresponding relations that an video of a next video group is produced by using at least one video of an video group;
a second storage part for searchably storing a mutual corresponding relation obtained from the series of corresponding relations; and
a control part wherein when an video of one of the plurality of video groups is designated, an video of other video group having a corresponding relation with the designated video is specified with reference to the second storage part, and the corresponding relation between the designated video and the specified video is displayed on a display part.

3. The video access system according to claim 2, wherein the second storage part searchably stores corresponding information showing that each video section corresponds to one video section of other video group with respect to each said plurality of video groups.

4. The video access system according to claim 2, further comprising a corresponding relation generation part for generating the mutual corresponding relation from the series of corresponding relations.

5. The video access system according to claim 2, wherein the control part contrast-displays an video section of the specified video based on an video section of the designated video.

6. The video access system according to claim 2, wherein when the specified video is designated in the corresponding relation between the designated video and the specified video, the control part searches the specified video from the first storage part and displays the specified video as a designated video on the display part.

7. An video access method for accessing a desired video from a plurality of videos, wherein
a) a plurality of video groups having series of corresponding relations that an video of a next video group is produced by using at least one video of an video group are searchably stored,
b) a mutual corresponding relation generated from the series of corresponding relations is stored,
c) when an at least one video of the plurality of video groups is designated, an video of other video group having a corresponding relation with the designated video is specified with reference to the mutual corresponding relation,
d) the designated video is displayed in a first region of a display screen, and
e) the corresponding relation between the designated video and the specified video is displayed in a second region of the display screen.

8. The video access method according to claim 7, wherein a given display form is prepared correspondingly to the respective plurality of video groups, and the corresponding relation between the designated video and the specified video is displayed in the second region by the display form corresponding to an video group to which the designated video belongs.

9. The video access method according to claim 8, wherein the display form contrast-displays an video section of the specified video based on an video section of the designated video.

10. The video access method according to claim 7, wherein when the specified video is designated in the display form wherein a corresponding relation between the designated video and the specified video is displayed, the steps c) to e) are repeated for the specified video as a designated video.

11. A computer program for making a computer execute an video access process to access a desired video from a plurality of video groups having series of corresponding relations that an video of a next video group is produced by using at least one video of an video group, comprising:
a step for storing a mutual corresponding relation generated from the series of corresponding relations;
a step wherein when an video of one of the plurality of video groups is designated, an video of other video group having a corresponding relation with the designated video is specified with reference to the mutual corresponding relation;
a step for displaying the designated video in a first region of a display screen; and
a step for displaying the corresponding relation between the designated video and the specified video in a second region of the display screen.

12. An video access method for accessing a desired video from a plurality of videos, wherein
an video of one of a first video group, a second video group produced by using the first video group, and a third video group produced by using the second video group is designated, whereby
an video of other video group having a corresponding relation with the designated video is specified, and the corresponding relation between the designated video and the specified video is displayed.

13. The video access method according to claim 12, wherein the corresponding relation is generated from series of corresponding relations that an video of a next video group is produced by using at least one video of an video group.

14. The video access method according to claim 13, wherein a given display form is prepared correspondingly to the respective plurality of video groups, and the corresponding relation between the designated video and the specified video is displayed by the display form corresponding to an video group to which the designated video belongs.

15. The video access method according to claim 14, wherein the display form contrast-displays an video section of the specified video based on an video section of the designated video.
